(19) Europäisches Patentamt
European Patent Office
Office européen des brevets

(11) Veröffentlichungsnummer: **0 457 103 A1**

# (12) EUROPÄISCHE PATENTANMELDUNG

(21) Anmeldenummer: **91107057.1**

(22) Anmeldetag: **01.05.91**

(51) Int. Cl.5: **C08L 77/00**, C08L 77/02, C08L 77/06, C08L 69/00, C08L 67/02, C08L 67/03

(30) Priorität: **15.05.90 DE 4015540**

(43) Veröffentlichungstag der Anmeldung: **21.11.91 Patentblatt 91/47**

(84) Benannte Vertragsstaaten: **BE DE FR GB IT NL**

(71) Anmelder: **BAYER AG**

**W-5090 Leverkusen 1 Bayerwerk(DE)**

(72) Erfinder: **Heger, Georg, Dr.**
**Uerdinger Strasse 260**
**W-4150 Krefeld(DE)**
Erfinder: **Fengler, Gerd, Dr.**
**Deutschordensweg 12**
**W-4150 Krefeld(DE)**
Erfinder: **Westeppe, Uwe, Dr.**
**Vogelskamp 72**
**W-4020 Mettmann(DE)**
Erfinder: **Idel, Karsten-Josef, Dr.**
**Am Schwarzkamp 38**
**W-4150 Krefeld(DE)**
Erfinder: **Müller, Peter-Rolf, Dr., c/o Mobay Corp.**
**Mobay Road**
**Pittsburgh, Pennsylvania 15205-9741(US)**
Erfinder: **Buekers, Josef**
**Kneinstrasse 58A**
**W-4150 Krefeld(US)**

## (54) Mischungen von Polyamiden mit aromatischen (Co)Poly-(ester)-(carbonaten) auf Basis tert.-Alkylestergruppen enthaltender Bisphenole.

(57) Gegenstand der Erfindung sind homogen verarbeitbare Mischungen aus

A) teilkristallinen oder amorphen Polyamiden,

B) neuen, aromatischen (Co)Poly-(ester)-(carbonaten), (Co)Polycarbonaten oder (Co)Polyestern auf Basis von Bisphenolen mit seitenständigen tert.-Alkylestergruppen und gegebenenfalls

C) üblichen thermoplastischen aromatischen (Co)Polyestern, (Co)Polycarbonaten oder (Co)Poly-(ester)-(carbonaten).

Weiterhin wird die Verwendung der Mischungen zur Herstellung von Formkörpern beansprucht. Um homogen verarbeitbare Mischungen zu erhalten, müssen durch die Komponente B) Reste [•] der neuartigen Bisphenole mit seitenständigen tert.-Alkylestergruppen, der Formel (I)

EP 0 457 103 A1

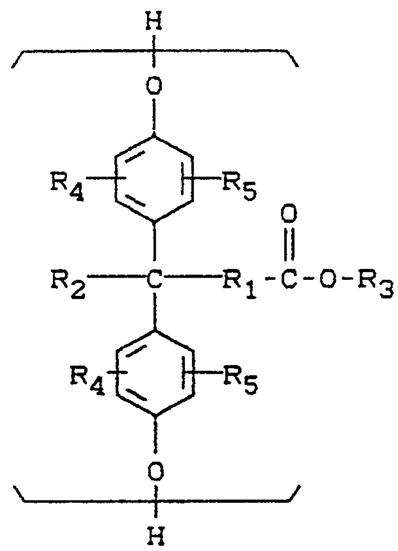

oder

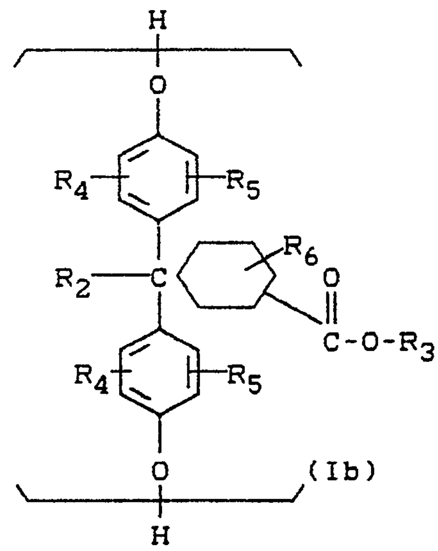

(Ia) (Ib)

in Mengen von 0,01 bis 10 Gew.-%, besonders bevorzugt 0,3 bis 3 Gew.-%, in die Mischung der Polymeren (A + B + C) eingebracht sein.

Die neuen Mischungen sind überraschend verträglich, daraus hergestellte Formkörper weisen gute Zähigkeiten und Fließnahtfestigkeiten auf, sind nicht delaminierend und besitzen gute Oberflächen. Es lassen sich so einheitliche Formkörper aus den genannten Mischungskomponenten herstellen, wobei B) verträglichkeitsvermittelnd wirkt.

Gegenstand der Erfindung sind homogen verarbeitbare Mischungen aus

A) teilkristallinen oder amorphen Polyamiden,

B) neuen, aromatischen (Co)Poly-(ester)-(carbonaten), (Co)Polycarbonaten oder (Co)Polyestern auf Basis von Bisphenolen mit seitenständigen tert.-Alkylestergruppen und gegebenenfalls

c) üblichen thermoplastischen aromatischen (Co)Polyestern, (Co)Polycarbonaten oder (Co)Poly-(ester)-(carbonaten).

Weiterhin wird die Verwendung der Mischungen zur Herstellung von Formkörpern beansprucht. Um homogen verarbeitbare Mischungen zu erhalten, müssen durch die Komponente B) Reste [•] der neuartigen Bisphenole mit seitenständigen tert.-Alkylestergruppen, der Formel (I)

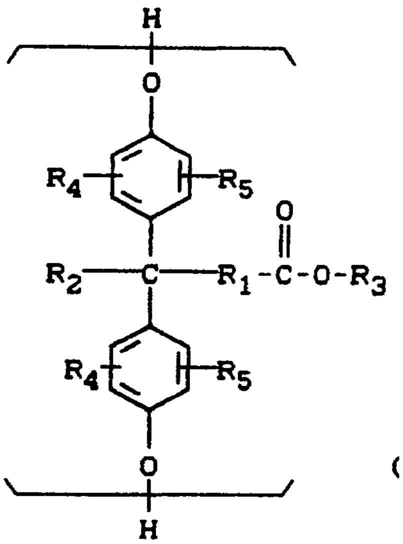

(Ia)

oder

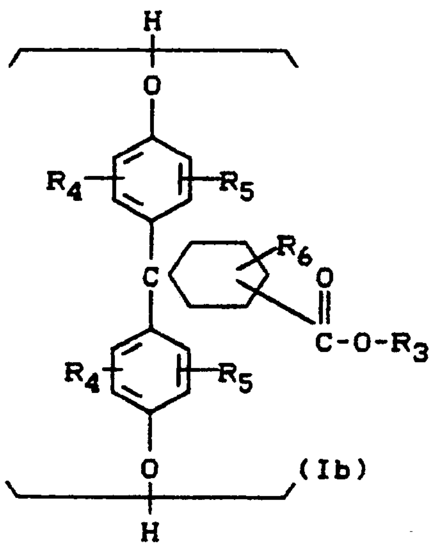

(Ib)

in Mengen von 0,01 bis 10 Gew.-%, besonders bevorzugt 0,3 bis 3 Gew.-%, in die Mischung der Polymeren (A + B + C) eingebracht sein.

Die neuen Mischungen sind überraschend verträglich, daraus hergestellte Formkörper weisen gute Zähigkeiten und Fließnahtfestigkeiten auf, sind nicht delaminierend und besitzen gute Oberflächen. Es lassen sich so einheitliche Formkörper aus den genannten Mischungskomponenten herstellen, wobei B) verträglichkeitsvermittelnd wirkt.

Formmassen aus Polyestern und Polyamiden sind an sich bekannt, z.B. aus den DE-A 23 07 895, 23 50 852 und der EP-A 44 141. Die mechanischen Eigenschaften dieser Formmassen-Mischungen sind jedoch nicht befriedigend. Aus der DE-A 27 51 969 sind Formmassen-Mischungen aus Polycarbonaten und Polyestern bekannt, die durch Zusatz geringer Mengen an Polyamid stabilisiert werden. JP-85 031 224 beschreibt Mischungen aus Polyamid, Polycarbonat, Polyacrylat und aromatischen Polyestern. In JP 59 113 049 werden Mischungen aus aromatischen Polyestern, Polyamiden, Polycarbonat und Füllstoff beansprucht. Aus EP 227 053 und EP 269 984 geht hervor, daß sich aus Polyamid, aromatischem Polycarbonat und Polyester mit Hilfe von Polykondensaten auf der Basis von Bisphenolen mit Glycidyl-Endgruppen gut verträgliche Mischungen herstellen lassen. Desweiteren sind auch Mischungen aus Polyamiden, aromatischen Polyestercarbonaten und kautschukelastischen Polymerisaten bekannt. US 4 788 248 beschreibt Blends aus Polyamid, Polyestercarbonat und Polyamid-Polyesterblock-Copolymeren, während bei US 4 800 218 verträgliche Mischungen beansprucht werden, die aus Polyamid und endgruppenmodifizierten aromatischen Polyestercarbonaten bestehen. Deren Kerbschlagzähigkeit ist jedoch gegenüber ternären Mischungen nicht verbessert.

Es wurde nun überraschend gefunden, daß man verträgliche Polyamid/Poly(ester)(carbonat)-Mischungen mit guten Zähigkeiten und Fließnahtfestigkeiten erhält, wenn man spezielle aromatische Polyestercarbonate auf der Basis von Bisphenolen mit seitenständigen tert.-Alkylestergruppen einsetzt.

Mischungen aus Polyamiden und aromatischen (Co)Polyestern, (Co)Polycarbonaten oder (co)-Polyestercarbonaten sind bei Extrusion in den meisten Fällen nicht homogen verarbeitbar. Sie geben z.B. trübe, inhomogene Schmelzen, die Formkörper delaminieren, d.h. können mechanisch an der Phasengrenzfläche getrennt werden und zeigen auch andere Unzulänglichkeiten.

So sind z.B. Mischungen aus Polyamid-6 oder Polyamid-6,6 mit aromatischen (Co)Polyestercarbonaten, z.B. auf Basis Terephthalsäure/Isophthalsäure (1:1)/Phosgen und aromatischen Bisphenolen (z.B. 2,2-Bis(4-hydroxyphenyl)-propan) (Verhältnis Dicarbonsäure zu Phosgen 80:20) bei Extrusion trübe, inhomogen, sich aufblähend und praktisch unbrauchbar für Formkörper-Verarbeitung.

Gegenstand der Erfindung sind homogen verarbeitbare Mischungen, die A und B in Mengen von

A) 1 bis 99 Gew.-%, vorzugsweise 10 bis 90 Gew.-%, insbesondere 25 bis 75 Gew.-% teilkristalline und/oder amorphe Polyamide, vorzugsweise mit geringen Gehalten an Aminoendgruppen,

B) 99 bis 1 Gew.-%, vorzugsweise 90 bis 10 Gew.-%, insbesondere 25 Gew.-%
eines aromatischen (Co)Polyesters,
eines aromatischen (Co)Polycarbonats und/oder
eines aromatischen (Co)Polyestercarbonats
auf der Basis von seitenständigen tert.-Alkylestergruppen enthaltenden Bisphenolen der Formel (Ia oder Ib)

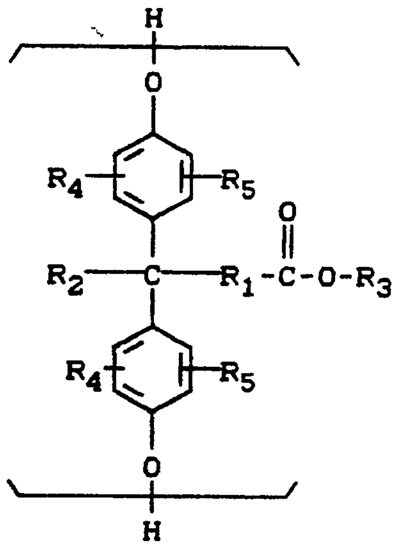

(Ia) oder

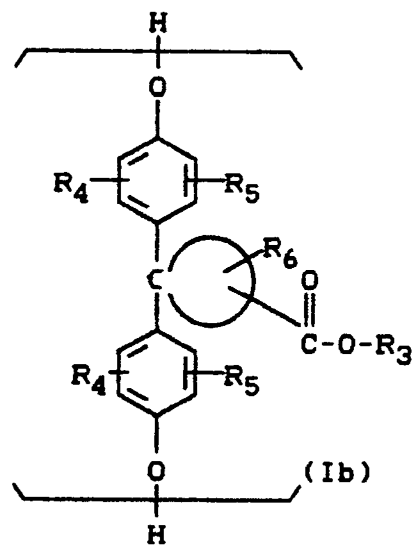

(Ib)

wobei

| | |
|---|---|
| $R_1$ | ein $C_1$-$C_6$-Alkylenrest, bevorzugt $(CH_2)n$; oder, zusammen mit $R_2$, einem Cycloalkylrest mit 5-8 oder 12 C-Atomen, vorzugsweise 5-6, insbesondere mit 6 Ringgliedern, welcher Cycloalkylrest mit einer $-CO_2R$-Gruppe und gegebenenfalls zusätzlich einem $R_6$-Substituenten substituiert ist, |
| $R_2$ | ein $C_1$-$C_{12}$-Alkylrest, bevorzugt $CH_3$, |
| $R_3$ | ein tertiärer $C_4$-$C_9$-Alkylrest, |
| $R_4$, $R_5$ | unabhängig voneinander Wasserstoff, Halogen, $C_1$-$C_6$-Alkyl, Cycloalkyl, Aryl (bevorzugt wasserstoff oder Methyl) und |
| $R_6$ | ein $C_1$-$C_6$-Alkylrest |
| n | eine ganze Zahl von 0 bis 6, bevorzugt 1 bis 3, insbesondere 2 |

und gegebenenfalls

C) weitere thermoplastische, aromatische (Co)Polyester, (Co)Polycarbonate oder (Co)Polyestercarbonate in der Mischung enthalten, so daß sich A), B) und gegebenenfalls C) zu 100 Gew.-% ergänzen und der Gehalt an Resten von seitenständigen tert.-Alkylestergruppen enthaltenden Bisphenolen in der Mischung aus A), B) und C) 0,01 bis 10 Gew.-%, bevorzugt 0,1 bis 6 Gew.-% und besonders bevorzugt 0,3 bis 3 Gew.-% beträgt,

enthalten.

Als Polyamidkomponente A) der erfindungsgemäßen Formmassen-Mischung eignen sich teilkristalline oder amorphe Polyamide, insbesondere mit reduzierten Mengen an Aminoendgruppen.

Als teilkristalline Polyamide sind beispielsweise einsetzbar: Polyamid-6, Polyamid-6,6, Polyamid-4,6 und teilkristalline Copolyamide auf Basis dieser Komponenten. Weiterhin kommen beispielsweise teilkristalline Polyamide in Betracht, deren Säurekomponente insbesondere ganz oder teilweise (neben Adipinsäure bzw. ε-Caprolactam) aus Terephthalsäure und/oder Isophthalsäure und/oder Korksäure und/oder Sebacin- und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Tetramethylendiamin und/oder Hexamethylendiamin und/oder 2,2,4- und/oder 2,4,4-Trimethylhexamethylendiamin und/oder Isophorondiamin besteht, und deren Zusammensetzungen aus dem Stand der Technik prinzipiell bekannt sind.

Außerdem sind teilkristalline Polyamide beispielhaft zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide A) sind Polyamid-6 und Polyamid-6,6 oder ihre Mischungen oder Copolyamide mit nur geringen Anteilen (bis etwa 10 Gew.-%) oder Co-Komponenten.

Es können als Polyamidkomponenten A) auch amorphe Polyamide eingesetzt werden. Sie werden erhalten durch Polykondensation von Diaminen, beispielsweise Ethylendiamin, Tetramethylendiamin, Hexamethylendiamin, Decamethylendiamin, 2,2,4- und/oder 2,4,4-Trimethylhexamethylendiamin, m- und/oder p-Xylylendiamin, Bis-(4-amino-cyclohexyl)-methan oder Gemischen aus 4,4'- oder 2,2'-Diamino-dicyclohexylmethanen, 2,2-Bis-(4-amino-cyclohexyl)-propan, 3,3'-Dimethyl-4,4'-diamino-dicyclohexylmethan, 3-Aminoethyl-3,5,5-tri-methyl-cyclohexylamin, 2,5- und/oder 2,6-Bis-(amino-methyl)-norbornan und/oder 1,4-Diaminomethylcyclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sind auch amorphe Copolymere, die durch Polykondensation mehrerer Monomere enrhalten werden, geeignet, ferner solche Copolymere, die unter Zusatz von Aminocarbonsäuren wie $\omega$-Aminocapronsäure, $\omega$-Aminoundecansäure oder $\omega$-Aminolaurinsäure oder ihren Lactamen, hergestellt werden.

Anstelle des reinen 4,4'-Diamino-dicyclohexylmethans können auch Gemische der stellungsisomeren Diamino-dicyclohexylmethane eingesetzt werden, die sich zusammensetzen aus:

70 bis 99 Mol-% des 4,4'-Diaminoisomeren

1 bis 30 Mol-% des 2,4'-Diaminoisomeren

0 bis 2 Mol-% des 2,2'-Diaminoisomeren

und gegebenenfalls entsprechend höherkondensierten Diaminen, die durch Hydrierung von Diaminophenylmethan technischer Qualität erhalten werden.

Aus den genannten Komponenten wie Diaminen bzw. Dicarbonsäuren ist für amorphe Polyamide mindestens eine der Komponenten unsymmetrisch oder seitenkettenhaltig.

Besonders geeignete amorphe Polyamide sind die Polyamide, hergestellt aus Isophthalsäure, Tetramethylendiamin und/ider Hexamethylendiamin und weiteren Diaminen wie 4,4'-Diamino-dicyclohexylmethan, Isophorondiamin, 2,2,4-und/oder 2,4,4-Trimethyl-hexamethylendiamin, 2,5-und/oder 2,6-Bis-(aminomethyl)-norbornan; oder aus Isophthalsäure, 4,4'-Diamino-dicyclohexylmethan und $\epsilon$-Caprolactam;oder aus Isophthalsäure, 3,3'-Dimethyl-4,4'-diamino-dicyclo-hexylmethan und Laurinlactam; oder aus Terephthalsäure und dem Isomerengemisch aus 2,2,4-und/oder 2,4,4-Trimethylhexamethylendiamin.

Es können auch Gemische aus teilkristallinen und amorphen Polyamiden, insbesondere solche mit 20 bis 97 Gew.-% teilkristallinen und Polyamiden und 3 bis 20 Gew.-% amorphen Polyamiden eingesetzt werden.

Erfindungsgemäß bevorzugt werden Polyamide A) mit einer so geringen Amino-Endgruppen-Konzentration, daß kein nennenswerter Abbau des Polycarbonats bzw. Polyestercarbonats, d.h. Verringerung der Viskosität und des mittleren Molekulargewichts $M_w$ um mehr als 20 % eintritt - erkennbar an der gleichbleibenden Zähigkeit der Blends -. Derartige Polyamide können durch Endcapping der reaktiven Amino-Endgruppen an den Polymeren (mittels Kettenabbrechern üblicher Art, z.B. mit Monocarbonsäuren wie Propionsäure) auf der Stufe des Polyamids oder bereits während der Polymerisation des Polyamids, unter geeigneten, dem Fachmann bekannten Bedingungen erhalten werden.

Die Anzahl der Aminoendgruppen kann auch auf der Stufe des Polyamids durch eine Reihe von Endcapping-Reaktionen entsprechend dem Stand der Technik (siehe EP 143 037, 188 328; DE 19 12 549, 19 58 306; US 3 383 391, 3 890 286) verringert werden. Derartige Reaktionen sind beispielsweise die Umsetzung mit Carbonsäureanhydriden, Säurechloriden ($R^1COCl$), Carbonsäuren, -estern, -amiden $R^1CONR^1R^1$ oder Oxazolinonen, oder aber die Umsetzung mit Carbonaten ($R^1CO(CO)OR^1$) mit Isocyanaten oder mit Carbodiimiden zu Guanidinen. Als weitere Reaktionen sind zu erwähnen: die Umsetzung der Aminoendgruppen mit Aldehyden oder Acetalen zu Iminen, aber auch die Reaktion mit Epoxiden und Oxazolinen oder die Addition an olefinische Doppelbindungen $R^2CH=CHR^2$ ($R^1$ = gesättigter oder ungesättigter aliphatischer oder aromatischer Kohlenwasserstoff; $R^2$ = $R^1$, $-(CO)R^3$, $-(C=O)OR^1$, $-(C=O)OH$, $-CHO$, $-(C=O)NR^1R^1$; $R^3$ = $C_2$-$C_{15}$-Alkylrest, $C_3$-$C_{18}$-Cycloalkyl, $C_6$-$C_{20}$-Arylrest). Desweiteren sind zur Verkappungsreaktion Copolymere zu nennen, die die genannten Reaktivgruppen enthalten, wie beispielsweise Styrol-Maleinsäure-Copolymerisate (Dylark®, Cadon®), Copolymere auf der Basis von $\alpha$-Olefinen bzw. Alkylvinyl-ether und Maleinsäureanhydrid (Gantrez®), Maleinsäureanhydrid-modifizierte Olefine (z.B. US 3 560 457, Hercoprime®, Plexar®)und EP(D)M-Kautschuke, (Exxelor®, z.B. Exxelor 1803 (Esso) Polybutadien-Styrol-Maleinsäureanhydrid-Terpolymere (Ricon®) oder Polykondensate aus 2,2-Di-(4-hydroxyphenyl)-propan sowie Epichlorhydrin u.ä..

Die Endcapping-Reaktion kann auf einem Extruder in der Polyamidschmelze mit den Endcapping-Reagenzien durchgeführt werden, auch in Anwesenheit eines zweiten oder dritten Thermoplasten. Die optimalen Reaktionsbedingungen lassen sich leicht in Vorversuchen ermitteln. Dabei ist es offensichtlich, daß die Temperatur so hoch gewählt werden muß, daß die Harzmasse schmilzt und eine Reaktion mit den zugesetzten Reagentien eintritt, das Polyamid sich dabei aber nicht zersetzt (weitere Einzelheiten sind der US-PS 4 749 754 zu entnehmen). Die Aminoendgruppen sollen dabei möglichst auf Werte ≤50 mVal $NH_2$/kg Polyamid, bevorzugt ≤25 mVal/kg und insbesondere auf ≤10 mVal/kg vermindert werden.

Die Polyamide A) können auch aus Mischungen von einem Copolyamid, bestehend aus wiederkehrenden Einheiten, die sich von der Adipinsäure und Hexamethylendiamin ableiten und Einheiten, die sich von ε-Caprolactam ableiten, und Polyhexamethylenadipinsäureamid, wie in der DE-OS 37 35 404 beschrieben, oder von teilkristallinen und amorphen Polyamiden bestehen, wobei vorzugsweise der amorphe Polyamidanteil unter dem teilkristallinen Polyamidanteil liegt, insbesondere 3 bis 20 Gew.-% beträgt.

Bevorzugt sind teilkristalline Polyamide auf Basis Polyamid-6, Polyamid-6,6 und teilkristalline Polyamide auf Basis dieser Hauptkomponenten unter Zusatz von Co-Komponenten der erwähnten Art.

Bei der Komponente B) handelt es sich um aromatische, seitenständige tert.-Alkylestergruppen aufweisende Polyester oder (Co)Polyester, Polycarbonate oder (Co)Polycarbonate oder Polyestercarbonate bzw. (Co)Polyestercarbonate auf Basis der Bisphenole der Formel (I).

Insbesondere sind beispielsweise Bisphenole II bis IV zur Herstellung der erfindungsgemäß zu verwendenden (Co)Poly(ester)(carbonate) B) geeignet.

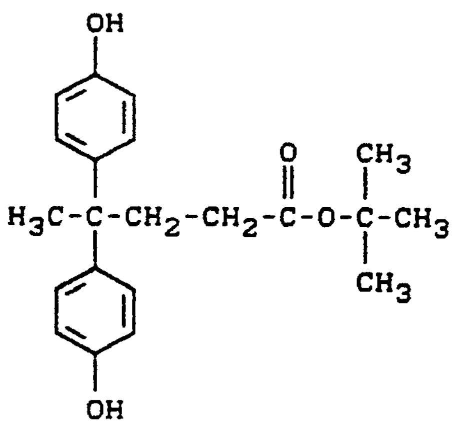

(II),

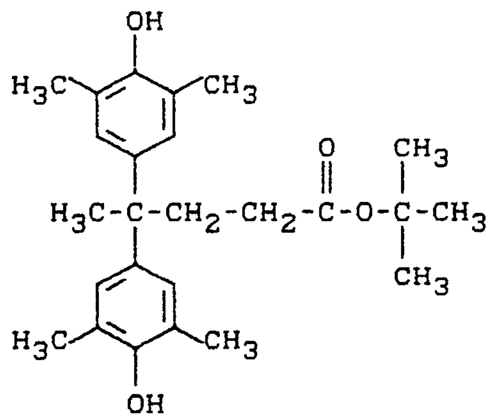

(III) und

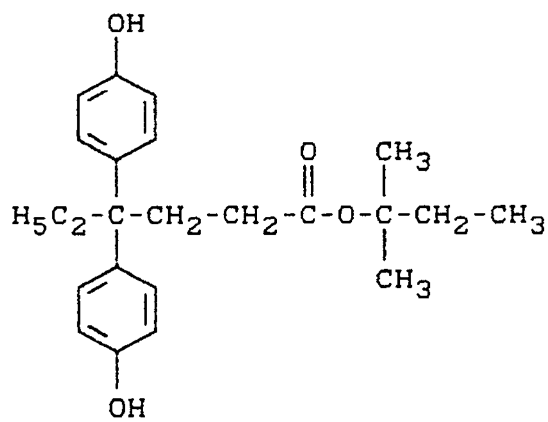

(IV),

wobei der 4,4-Bis-(4-hydroxyphenyl)-valeriansäure-tert.-butylester der Formel (II) als Aufbaukomponente besonders bevorzugt ist. Die Herstellung dieser (Co)Poly(ester)-(carbonate) wird in der eigenen, gleichzeitig eingereichten deutschen Patentanmeldung Le A 27 108 (P 40 15 541.2) beansprucht.

Die Bisphenole der Formel (I) können beispielsweise durch Veresterung von Bisphenolcarbonsäure (I, $R_3$ = H) mit α,α-disubstituierten Olefinen (z.B. $CH_2 = C(R)_2$) hergestellt werden (zur Herstellung von Estern tert. Alkohole vgl. Houben-Weyl), Band Sauerstoff-Verbindungen III, S. 534, 550, G. Thieme-Verlag, Stuttgart (1952).

Beispiele für geeignete Bisphenolcarbonsäuren sind: 4,4-Bis-(4-hydroxyphenyl)-valeriansäure, 4,4-Bis-(4-hydroxyphenyl)-capronsäure, 5,5-Bis-(4-hydroxy-3,5-dimethyl)-heptansäure, 5,5-Bis-(4-hydroxy-phenyl)-heptansäure, 4,4-Bis-(4-hydroxyphenyl)-octansäure.

Zur tert.-Esterbildung können als α,α-disubstituierte Olefine eingesetzt werden: Isobuten, 2-Methyl-1-buten, 2,3-Dimethyl-1-buten, 2-Ethyl-1-buten, 2,3,3-Trimethylbuten-1, 2,3-Dimethylpenten-1, 2,4-Dimethylpenten-1, 2-Ethyl-1-penten und 2-Methyl-1-penten.

Die Herstellung der Ester aus Bisphenolcarbonsäuren und α,α-disubstituierten Olefinen erfolgt üblicherweise unter Zusatz von sauren Katalysatoren wie Chlorwasserstoff, Bromwasserstoff, Bortrifluorid, Phosphorsäure, konzentrierte Salzsäure oder konzentrierte Schwefelsäure sowie Mischungen aus Essigsäure und Acetanhydrid.

Die Bisphenole der Formel (I) können in an sich bekannter Weise (vgl. z.B. US 3 427 345) durch Umsetzung von Phenolen der Formel (V)

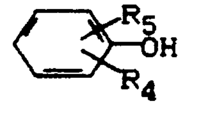

(V)

mit Ketocarbonsäure-tert.-alkylestern der Formel (VI)

$$R_2-\overset{\overset{O}{\|}}{C}-R^1-\overset{\overset{O}{\|}}{C}-OR^3 \qquad (VI)$$

hergestellt werden, wobei in den Formeln (V) und (VI) $R_1$, $R_2$, $R_3$, $R_4$, $R_5$ und n die für Formel (I) angegebene Bedeutung haben.

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, 2,6-Diphenylphenol und o-Benzylphenol.

Beispiele für Ketocarbonsäureester der Formel (VI) sind:
3-Oxo-buttersäure-tert.-butylester, 2-Methyl-3-oxovaleriansäure-tert.-butylester, Lävulinsäure-tert.-butylester, 5-Oxoheptansäure-tert.-butylester, 5-Oxoheptansäure-tert.-butylester, 4-Oxohexansäure-tert.-butylester, 5-Oxohexansäure-tert.-butylester, 5-Oxoheptansäure-tert.-pentylester, 4-Oxoheptansäure-tert.-octylester, 4-Oxohexansäure-tert.-hexylester, 5-Oxohexansäure-tert.-hexylester.

Zur Herstellung der Bisphenole (I) werden im allgemeinen 2 bis 10 Mol, vorzugsweise 2,5 bis 6 Mol Phenol (V) pro Mol Ketocarbonsäure-tert.-alkylester (VI), verwendet. Bevorzugte Reaktionszeiten betragen 1 bis 100 Stunden. Im allgemeinen arbeitet man bei Temperaturen von -30 °C bis 300 °C, vorzugsweise von -15 °C bis 150 °C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkylmercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet. Geeignete wasserentziehende Mittel sind beispielsweise Acetanhydrid, Zeolithe, Polyphosphorsäure und Phosphorpentoxid.

Erfindungsgemäß können auch tert.-Alkylester der Formel (Ib) eingesetzt werden. Diese können durch Umsetzung von 2,3 oder 4-Cyclohexanon-carbonsäurederivaten mit Phenolen über saure Katalyse (z.B. HCl-Gas) hergestellt werden, wie dies in den Japanischen Anmeldungen 219 194 und 219 195 der Mitsui Toatsu Chem. Inc. (vom 03.09.1987) beschrieben ist.

Die Herstellung der aromatischen, seitenständige tert.-Alkylestergruppen tragenden (Co)Poly-(ester)-(carbonate) B) ist in der eigenen, gleichzeitig eingereichten deutschen Patentanmeldung Le A 27 108 (P 40 15 541.2) beschrieben.

Es können die Bisphenole der Formel alleine, zu Homopolymeren bzw. gemeinsam mit anderen, üblichen Diphenolen, beispielsweise denen der Formel (VII) eingesetzt werden. Dabei soll das Verhältnis der erfindungskennzeichnenden Bisphenole (I) zu den normalen, anderen Diphenolen (VII) 0,05 bis 100 % (I) zu 99,5 bis 0 Mol-% (II), vorzugsweise 1 bis 50 Mol-% (I) zu 99 bis 50 Mol-% anderes, normales Bisphenol (VII), insbesondere 1,5 bis 30 Mol-% und 98,5 bis 70 % anderes Diphenol (VII), ganz besonders aber 2 bis 20 Mol-% Bisphenol (I) und 98 bis 80 Mol-% anderes Bisphenol (VII) betragen. Es ist dabei bevorzugt, Copolycarbonate, d,h. Mischungen aus (I) und (VII) als Diphenolverbindungen zu verwenden.

Zur Synthese der Polymeren B) werden Dicarbonsäure(chloride), zu Polyestern oder Copolyestern, Phosgen, Diphenylcarbonat oder Bischlorkohlensäureester, zu Polycarbonaten oder Copolycarbonaten bzw. sowohl Dicarbonsäure(chloride) und Kohlensäurederivate, zu (Co)Poly-(ester)-(carbonaten) verwendet.

Die als Legierungsbestandteil C) einsetzbaren thermoplastischen, aromatischen Polyester oder Copolyester, Polycarbonate oder Copolycarbonate bzw. (Co)Poly(ester)-(carbonate) aus bekannten Komponenten werden nach üblichen Verfahren aufgebaut.

Beispiele für Diphenole der Formel (VII) sind:

HO-Ar-OH (VII)

Hydrochinon, Resorcin, Dihydroxydiphenyle, Bis-(hydroxyphenyl)-alkane, Bis-(hydroxyphenyl)-cycloalkane,

Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, Pentamethyl-(hydroxyphenyl)-indanol, α,α'-Bis-(hydroxyphenyl)-diisopropylbenzole sowie deren kernalkylierte und kernhalogenierte Verbindungen.

Diese und weitere geeignete aromatische Dihydroxyverbindungen sind z.B. in den US-Patentschriften 3 028 365, 2 999 835, 3 148 172, 3 271 268, 2 991 273, 3 271 367, 3 780 078, 3 014 891, 2 999 846 den deutschen Offenlegungsschriften 15 70 703, 20 36 052, 20 63 050, 22 11 957, 24 02 175, 24 02 176, 24 02 177, der französischen Patentschrift 1 561 518, in der Monographie "H. Schnell, Chemistry and Physics of Polycarbonates, Polymer Reviews 9, Interscience Publishers, New York 1964" und in V. Serini, D. Freitag und H. Vernaleken, "Polycarbonate aus o,o,o',o'-tetramethyl-bis-phenolensubstituierten Bisphenolen", Angewandte Makromolekulare Chemie 55 (1976) 175 bis 189 beschrieben.

Bevorzugte Phenole der Formel (VII) sind:
Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3',5'-dichlor-4'-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, Bis-(3,5-dimethyl-4-hydroxyphenyl)-butan, Bis-(3,5-dimethyl-4-hydroxyphenyl), 1,1,3,4,6-Pentamethyl-3-(3,5-dimethyl-4-hydroxyphenyl)-indan-5-ol, 1,1-Bis-(4-hydroxyphenyl)-3,3-dimethylcyclohexan, 1,1-Bis-(4-hydroxyphenyl)-3-methyl-cyclohexan, 1,1-Bis-(4-hydroxyphenyl)-3-methyl-cyclohexan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.
Insbesondere sind 2,2-Bis-(4-hydroxyphenyl)-propan und
1,1-Bis-(4-hydroxyphenyl)-3,3,5-trimethylcyclohexan bevorzugt.

Es können ein oder mehrere Diphenole eingesetzt werden. Diphenole können in an sich bekannter Weise durch Kondensation von Phenolen und Ketonen hergestellt werden.

Die eingesetzten (Co)Polycarbonate C) können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (VII) in wäßrig alkalischer Phase gelöst. Zur Herstellung von Co-Polycarbonaten werden Gemische von Diphenolen der Formel (VII) eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0 °C und 40 °C.

Als Verzweiger dienen, falls benutzt, in bekannter Weise geringe Mengen, vorzugsweise Mengen zwischen 0,05 und 2,0 Mol-% (bezogen auf eingesetzte Diphenole), an drei oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra- (4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-% an Verzweigern Können entweder mit den Diphenolen in der wäßrig alkalischen Phase vorgelegt werden oder in dem organischen Lösungsmittel gelöst vor der Phosgenierung zugegeben werden.

Neben den einzusetzenden Diphenolen der Formel (VII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach Molen Diphenolat-Struktureinheiten von (VII); ebenso kann bei Einsatz von Chlorkohlensäureestern die Phosgenmenge in bekannter Weise entsprechend reduziert werden.

Geeignete organische Lösungsmittel für die Lösung der Kettenabbrecher sowie gegebenenfalls für die Verzweiger und die Chlorkohlensäureester sind beispielsweise Methylenchlorid, Chlorbenzol, Aceton, Acetonitril oder Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate C) nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden. Die Isolierung der Polycarbonate erfolgt in bekannter Weise.

Die hochmolekularen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die verwendeten Polycarbonate C) haben bevorzugt Molekulargewichte Mw (Gewichtsmittel, ermittelt durch Gelchromatographie nach vorheriger Eichung) von mindestens 12 000, besonders bevorzugt von 12 000 bis 220 000 und insbesondere von 20 000 bis 100 000. Sie können linear oder verzweigt sein, sie sind Homopolycarbonate oder Copolycarbonate auf Basis der Diphenole der Formel (VII).

Geeignete, gegebenenfalls zur Herstellung von (Co)Polyestern oder von (Co)Polyestercarbonaten C) einzusetzende, aromatische Dicarbonsäuren sind beispielsweise Oxalsäure, Malonsäure, Bernsteinsäure, Glutarsäure, Adipinsäure, Pimelinsäure, Suberinsäure, Azelainsäure, Sebazin-säure, Nonandicarbonsäure, Decandicarbonsäure, Dodecandicarbonsäure, Octadecandicarbonsäure, Dimethylmalonsäure, Dimerfettsäure, 1,4-Cyclohexandicarbonsäure, Tetrahydroterephthalsäure, Tetrahydroisophthalsäure, Tetrahydrophthalsäure, 3,6-Endomethylen-tetrahydrophthalsäure, o-, m-, p-Phenylendiessigsäure, Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenyl-indan-4,5'-dicarbonsäure. Von den aromatischen Dicarbonsäuren werden besonders bevorzugt die Terephthalsäure und/oder Isophthalsäure eingesetzt.

Bevorzugt werden als (Co)Polyestercarbonate C) diejenigen, wo Dicarbonsäuren in einer Menge von 5 bis 98 Mol-%, bevorzugt von 20 bis 50 Mol-% und 60 bis 95 Mol-% und insbesondere von 25 bis 45 Mol-% und 75 bis 95 Mol-% bezogen auf die Summe der Dicarbonsäuren und der Kohlensäure enthalten sind. Sie können nach Verfahren hergestellt werden, wie sie für die Polyestercarbonat-Herstellung aus der Literatur bekannt sind, so z.B. nach Verfahren in homogener Lösung, nach dem Schmelzumesterungsverfahren und nach dem Zweiphasengrenzflächenverfahren. Bevorzugt werden Schmelzumesterungsverfahren uns insbesondere das Zweiphasengrenzflächenverfahren benutzt.

Umesterungsverfahren in der Schmelze (Acetatverfahren und Phenylesterverfahren) werden beispielsweise in den US-PS 3 494 885, 4 386 186, 4 661 580, 4 680 371 und 4 680 372, den EP-A 26 120, 26 121, 26 684, 28 030, 39 845, 91 602, 97 970, 79 075, 146 887, 156 103, 234 913, 234 919 und 240 301 sowie den DE-A 1 495 626, 2 232 877 beschrieben. Das Zweiphasengrenzflächenverfahren wird beispielsweise beschrieben in den EP-A 68 014, 88 322, 134 898, 151 750, 182 189, 219 708, 272 426, in DE-A 2 940 024, 3 007 934, 3 440 020 und in Polymer Reviews, Volume 10, "Condensation Polymers by Interfacial and Solution Methods", Paul W. Morgan, Interscience Publishers, New York 1965, Kap. VIII, S. 325, Polyester.

Beim Acetatverfahren werden im allgemeinen Bisphenoldiacetat bzw. Bisphenol und Acetanhydrid sowie aromatische Dicarbonsäure unter Abspaltung von Essigsäure zum Polyester kondensiert. Beim Phenylesterverfahren werden im allgemeinen Bisphenol, aromatische Dicarbonsäure oder Diphenylester der aromatischen Dicarbonsäure und gegebenenfalls Diphenylcarbonat unter Phenolabspaltung und gegebenenfalls

$CO_2$-Abspaltung zum Polyester bzw. Polyestercarbonat umgesetzt.

Beim Zweiphasengrenzflächenverfahren dienen als Ausgangsstoffe zur Herstellung von Polyestern C) und Polyestercarbonaten C), im allgemeinen Alkalibisphenolat, aromatisches Dicarbonsäuredichlorid und gegebenenfalls Phosgen. Bei dieser Kondensationsreaktion werden der Polyester bzw. das Poly(ester)-carbonat-Copolymere unter Alkalichloridbildung hergestellt. Im allgemeinen ist das gebildete Salz in der wäßrigen Phase gelöst, während der gebildete Polyester bzw. das gebildete Polycarbonat in der organischen Phase gelöst vorliegt.

Die Isolierung der Polyestercarbonate geschieht in bekannter Weise, indem man die bei Phasengrenzflächenverfahren erhaltene organische Phase abgetrennt, neutral und elektrolytfrei wäscht und dann beispielsweise aus organischer Phase unter Zusatz eines Nichtlösemittels fällt und trocknet.

Den erfindungsgemäßen Mischungen können ebenfalls noch übliche, literaturbekannte Schlagzähmodifikatoren, beispielsweise EP(D)M-, Acrylat- und Butadien-Kautschuke etc., und weitere übliche Additive hinzugegeben werden, z.B. Gleit- und Entformungsmittel, Nukleierungsmittel, Weichmacher, Stabilisatoren, Flammfest-Additive, Füll- und Verstärkungsstoffe, Farbstoffe sowie Thermostabilisatoren, Antioxidantien und/oder Lichtschutzmittel.

Diese Additive können in üblichen wirksamen Mengen entweder vor der Herstellung der erfindungsgemäßen Mischungen den Komponenten A), B) oder C) oder den binären Mischungen aus A) und B) oder A) und C) oder B) und C) zugesetzt werden oder nachträglich in die erfindungsgemäßen Mischungen eingearbeitet werden. Die Additive können auch in Form von Masterbatches eingearbeitet werden. Die Menge der Additive wird dabei so bemessen, daß die Additive die gewünschte Wirkung in der Mischung entfalten können. Sie ist leicht durch Vorversuche zu ermitteln.

Die erfindungsgemäßen Mischungen lassen sich zur Herstellung von Formkörpern in üblicher Weise verarbeiten.

## Beispiele

A) Polyamide

A.1 Polyamid-6 mit einer relativen Viskosität von 3,5 (gemessen an einer 1 gew.-%igen Lösung in m-Kresol bei 25° C) ohne Verkappung der Aminoendgruppen, Aminoendgruppengehalt ca. 0,08 Gew.-%.

A.2 Polyamid wie A.1 mit verringerter Aminoendgruppenkonzentration:
Auf einem kontinuierlich arbeitenden Doppelwellenextruder wurden 96,5 Gew.-% des Polyamids A.1 und 3,5 Gew.-% Styrol-Maleinsäureanhydrid-Copolymer (mit 14 Gew.-% MSA; Dylark 332 - Atlantic Richfield Company, USA) bei Massetemperaturen zwischen 270 und 285° C aufgeschmolzen und in der Schmelze homogenisiert. Der Schmelzestrang wird in Wasser abgeleitet, granuliert und getrocknet. Die Aminoendgruppenkonzentration lag danach unter 10 mVal/kg Polyamid.

A.3 Polyamid mit Kautschuk-Zusatz:
Auf einem kontinuierlich arbeitenden Doppelwellenextruder wurden 80 Gew.-% des Polyamids A.1 bei Massetemperaturen zwischen 270° C und 285° C aufgeschmolzen, 20 Gew.-% EPD-Kautschuk (aus Ethylen (45 Gew.-%)/Propylen, gepfropft mit ca. 0,7 Gew.-% Maleinsäureanhydrid: Exxelor VA 1803®, z.Z. Handelsprodukt der Firma Esso) zudosiert und in der Schmelze homogenisiert. Der Schmelzestrang wurde in Wasser abgeleitet, granuliert und getrocknet.

B) Erfindungskennzeichnende, Bisphenol I enthaltende Polymere

B.1 Aromatisches (Co)Polyestercarbonat auf der Basis von seitenständigen tert.-Alkylestergruppentragenden Bisphenolen (enthält ca. 10 Mol-% tert.-Alkylesterbisphenole).
2052 g (9,0 Mol) 2,2-Bis-(4-hydroxyphenyl)-propan, 342,0 g (1 Mol) Bisphenol (II), 1,845 g konz. NaOH und 60 l Wasser werden in einer Inertgas-Atmosphäre unter Rühren gelöst. Es werden 27 l Methylenchlorid zugegeben. Dann fügt man eine Lösung von 741 g (3,65 Mol) Isophthalsäuredichlorid, 741 g (3,65 Mol) Terephthalsäuredichlorid und 113,3 g 4-(1,1,3,3-Tetramethyl-butyl)-phenol in 3 l Methylenchlorid in 2 Minuten unter Rühren zu. Man rührt 30 Minuten bei 25° C. Anschließend werden 3,6 kg konz. NaOH zugegeben. In die gut gerührte Lösung wurden bei pH 13 bis 14 und 21 bis 25° C 1,2 kg Phosgen eingeleitet. Nach Zusatz von 500 ml konzentrierter NaOH und 14 ml N-Ethylpiperidin wurde 30 Min. gerührt. Die bisphenolatfreie wäßrige Phase wird abgetrennt, mit 15 l Methylenchlorid verdünnt und die organische Phase nach Ansäuern mit

Phosphorsäure mit Wasser neutral gewaschen und vom Lösungsmittel befreit. Das Polyestercarbonat zeigte eine relative Lösungsviskosität von 1,271 (gemessen in 0,5 %iger Lösung in Methylenchlorid bei 25° C).

B.2 Aromatisches Polyestercarbonat-Copolymer mit seitenständigen tert.-Alkylestergruppierungen, auf der Basis von tert.-Alkylestergruppen-tragenden Bisphenolen des Typs I (enthält 5 Mol-% Bisphenol I-Reste).

2166 g (9,5 Mol) 2,2-Bis-(4-hydroxyphenyl)-propan, 171,0 g (0,5 Mol) Diphenol II, 1,845 g konz, NaOH und 60 l Wasser werden in einer Inertgas-Atmosphäre unter Rühren gelöst. Es werden 27 l Methylenchlorid zugegeben. Dann fügt man eine Lösung von 741 g (3,65 Mol) Isophthalsäuredichlorid, 741 g (3,65 Mol) Terephthalsäuredichlorid und 113,3 g 4-(1,1,3,3-Tetramethyl-butyl)-phenol in 3 l Methylenchlorid in 2 Minuten unter Rühren zu. Man rührt 30 Minuten bei 25° C. Anschließend werden 3,6 kg konz. NaOH zugegeben. In die gut gerührte Lösung wurden bei pH 13 bis 14 und 21 bis 25° C 1,2 kg Phosgen eingeleitet, wobei der pH-Wert durch Zugabe von 200 ml konz. NaOH auf 13 gehalten wird. Nach Zusatz von 14 ml N-Ethylpiperidin wurde 30 Min. gerührt. Die bisphenolatfreie wäßrige Phase wird abgetrennt, mit 15 1 Methylenchlorid verdünnt und die organische Phase nach Ansäuern mit Phosphorsäure mit Wasser neutral gewaschen und vom Lösungsmittel befreit. Das Polyestercarbonat zeigte eine relative Lösungsviskosität von 1,258 (zur Messung siehe Beispiel B.1).

B.3 Aromatisches Polycarbonat-Copolymer mit seitenständigen tert.-Alkylestergruppierungen

1,0 g (0,003 Mol) des Diphenols (Herstellung im folgenden beschrieben), 17,1 g (0,055 Mol) 2,2-Bis-(4-hdyroxyphenyl)-3,3,5-trimethylcyclohexan, 9,6 g (0,042 Mol) 2,2-Bis-(4-hydroxyphenyl)-propan, 24,0 g (0,6 Mol) NaOH und 348 g Wasser werden in einer Inertgas-Atmosphäre unter Rühren gelöst. Dann fügt man eine Lösung von 0,516 g 4-(1,1,3,3-Tetramethyl)-phenol) in 260 ml Methylenchlorid zu. In die gut gerührte Lösung wurden bei pH 13 bis 14 und 21 bis 25° C 19,8 g (0,2 Mol) Phosgen eingeleitet. Danach werden 0,1 ml N-Ethylpiperidin zugegeben und noch 45 Minuten gerührt. Die bisphenolatfreie wäßrige Phase wird abgetrennt, die organische Phase nach Ansäuren mit Phosphorsäure mit Wasser neutral gewaschen und vom Lösungsmittel befreit.

Das Polycarbonat zeigte eine relative Lösungsviskosität von 1,26.

Herstellung von 4,4-Bis-(4-Hydroxyphenyl)-valeriansäure-tert.-butylester (Ausgangsmaterial in B3).

143,2 g (0,5 Mol) 4,4-Bis-(4-Hydroxyphenyl)-valeriansäure werden in 600 ml Methylisopropylketon gelöst, mit 5 ml conc. Schwefelsäure versetzt und auf -7° C abgekühlt. Bei dieser Temperatur wird bis zur Sättigung Isobutylen eingeleitet. Man läßt über Nacht bei Raumtemperatur stehen, und sättigt bei -3° C nochmals mit Isobuten. Man läßt zwei Tage bei Raumtemperatur nachreagieren. Die Lösung wird mit 100 ml Ether versetzt, mit 5 %iger Natriumhydrogencarbonatlösung säurefrei gewaschen, dann mit Wasser neutral gewaschen. Man trocknet über Natriumsulfat und fällt das Produkt mit Petrolether aus.

Ausbeute: 60,2 g

Schmelzpunkt: 124 bis 129° C aus der Mutterlauge kann durch Aufarbeiten weiteres Produkt isoliert werden.

C.2 Thermoplastisches, aromatisches Polycarbonat auf der Basis von 2,2-Bis-(4-hydroxyphenyl)-propan mit einer Viskosität von 1,28 (gemessen wie in Beispiel B.1).

C.3 Thermoplastisches, aromatisches Copolycarbonat auf Basis von 45 Mol-% 2,2-Bis-(4-hydroxyphenyl)-propan und 55 Mol-% 1,1-Bis-(4-hydroxyphenyl)-3,3,5-trimethyl-cyclohexan (vgl. Beispiele A der veröffentlichten deutschen Patentanmeldung P 3 833 953.6).

Das eingesetzte Copolycarbonat hatte eine relative Lösungsviskosität von 1,295 (vgl. Beispiel 1) und eine Glastemperatur von 204° C (nach Differential Scanning Calorimetry - DSC).

**Tabelle 1** Zusammensetzung der Mischungen (Angaben in Gew.-%)

| Nr. | Polyamide A | | | erfindungswesentliche (Co)Poly(ester)carbonate (Basis Bisphenole I) | | | (übliche, thermoplastische (Co)-Poly-(ester)-carbonate C) | | | Gew.-% Anteil (I) im Gesamtgemisch | Fülldruck beim Spritzguß [bar] |
|---|---|---|---|---|---|---|---|---|---|---|---|
| | A1 | A2 | A3 | B1 | B2 | B3 | C1 | C2 | C3 | | |
| 1* | 40 | - | - | - | - | - | 60 | - | - | - | 211 |
| 2* | 55 | - | - | - | - | - | 45 | - | - | - | 282 |
| 3* | 60 | - | - | - | - | - | 40 | - | - | - | 230 |
| 4 | 55 | - | - | - | 20 | - | 25 | - | - | 1 | 226 |
| 5 | 60 | - | - | - | 20 | - | 20 | - | - | 1 | 162 |
| 6 | 60 | - | - | 20 | - | - | 20 | - | - | 2 | 183 |
| 7 | 55 | - | - | 30 | - | - | 15 | - | - | 3 | 190 |
| 8 | 55 | - | - | 5 | - | - | 40 | - | - | 0,5 | 177 |
| 9 | 40 | - | - | 5 | - | - | 55 | - | - | 0,5 | 170 |
| 10* | - | 55 | - | - | - | - | 45 | - | - | - | 228 |
| 11 | - | 55 | - | 5 | - | - | 40 | - | - | 0,5 | 156 |
| 12 | - | 55 | - | 10 | - | - | 35 | - | - | 1 | 172 |
| 13 | - | 55 | - | - | 20 | - | 25 | - | - | 1 | 192 |
| 14 | - | - | 40 | 5 | - | - | 55 | - | - | 0,5 | 168 |
| 15* | 55 | - | - | - | - | - | 20 | 25 | - | - | 193 |
| 16* | - | - | 55 | - | - | - | 10 | 35 | - | - | 188 |
| 17* | - | - | 55 | - | - | - | 20 | 25 | - | - | 219 |
| 18 | 40 | - | - | 5 | - | - | - | 55 | - | 0,5 | 141 |
| 19* | - | - | 40 | 5 | - | - | - | 55 | - | 0,5 | 154 |
| 20* | - | - | 55 | - | - | - | 10 | - | 35 | - | 205 |
| 21 | - | - | 55 | - | - | - | 20 | - | 25 | - | 165 |
| 22 | - | - | 55 | 10 | - | - | - | - | 35 | 1 | 200 |
| 23 | - | - | 55 | - | 20 | - | - | - | 25 | 1 | 162 |
| 24 | 40 | - | - | 5 | - | - | - | - | 55 | 0,5 | 153 |
| 25 | - | - | 40 | 5 | - | - | - | - | 55 | 0,5 | 160 |

* Vergleichsmischungen

Herstellung und Prüfung der Formmassen

Auf einem kontinuierlich arbeitenden Doppelwellenextruder wurden das Polyamid A), das modifizierte (Co)Poly(ester)-(carbonat) B) sowie gegebenenfalls ein weiteres Polymer C) aufgeschmolzen und in der

Schmelze homogenisiert. Die Zylindertemperaturen wurden so gewählt, daß Massetemperaturen von 260 bis 340 °C eingehalten wurden. Der Schmelzestrang wurde in Wasser abgeleitet, granuliert und getrocknet.

Von den Formmassen wurden auf einer üblichen Spritzgußmaschine 80 mm x 10 mm x 4 mm Prüfstäbe hergestellt. Geprüft wurden der Zug-E-Modul (DIN 53 457), die Wärmeformbeständigkeit (Vicat B nach DIN 53 460 und die HDT-A, -B an flach aufgelegten Prüfkörpern bei einer Randfaserdehnung von 0,2 %, ISO 75) sowie die Schlagzähigkeit bzw. Kerbschlagzähigkeit nach Izod (ISO 180) bei verschiedenen Temperaturen. Außerdem wurde die Zusammenfließnahtfestigkeit am Normkleinstab 50 mm x 6 mm x 4 mm in Anlehnung an ISO 180 ermittelt.

Wie aus den Beispielen ersichtlich ist, zeichnen sich die erfindungsgemäßen Mischungen durch eine günstige Wärmeformbeständigkeit, gute Zähigkeit und Zusammenfließnahtfestigkeit aus.

Die Produkte zeigen keine Delaminierung der Polyamid-/Copolycarbonat Mischungen (streifig werden bis Abschuppen der Einzelkomponenten der Formkörper) sondern sie sind verträglich in ihren Polymerkomponenten. Die thermoplastische Verarbeitbarkeit ist bei Zusatz der tert.-Alkylester (Carbonate B)) deutlich verbessert, z.B. ist die Fließfähigkeit verbessert, der Fülldruck beim Spritzen der Formkörper nimmt deutlich ab (um etwa 20 %), ferner wird der Abbau des aromatischen Polyestercarbonats C) während der Mischverarbeitung mit dem Polyamid verringert.

**Tabelle 2** Prüfergebnisse

| Versuch-Nr. | Biege-E-Modul (MPa) | $a_n$ ($kJ/m^2$) | $a_k$ ($kJ/m^2$) | $a_{nF}$ ($kJ/m^2$) | HDT (°C) |
|---|---|---|---|---|---|
| 1* | 2536 | 43 | 5,5 | 4 | 137 |
| 2* | 2376 | 20 | 5,4 | 1 | 66 |
| 3* | 2586 | 40 | 5,4 | 7 | 94 |
| 4 | 2377 | n.g. | 11,6 | 2 | 71 |
| 5 | 2448 | n.g. | 7,5 | 13 | 57 |
| 6 | 2388 | n.g. | 6,3 | 9 | 56 |
| 7 | 2609 | 17 | 5,4 | 11 | 102 |
| 8 | 2514 | 24 | 8,7 | 9 | 101 |
| 9 | 2500 | 91 | 11,0 | 17 | 101 |
| 10 | 2704 | 40 | 7,7 | 9 | 97 |
| 11 | 2990 | 43 | 8,7 | 4 | 112 |
| 12 | 2628 | n.g. | 11,3 | 32 | 112 |
| 13 | 2662 | n.g. | 14,6 | 62 | 115 |
| 14 | 2116 | n.g. | 10,0 | 10 | 116 |
| 15* | 2753 | 29 | 4,1 | 4 | 117 |
| 16* | 2061 | 26 | 4,0 | 4 | 96 |
| 17* | 2068 | 38 | 4,0 | 4 | 103 |
| 18 | 2999 | 73 | 9,0 | 6 | 116 |
| 19 | 2335 | n.g. | 45,0 | 5 | 112 |
| 20 | 2126 | 107 | 11,3 | 4 | 122 |
| 21 | 2139 | 139 | 14,9 | 4 | 114 |
| 22 | 2019 | n.g. | 19,0 | 8 | 114 |
| 23 | 1876 | n.g. | 18,1 | 9 | 123 |
| 24 | 2758 | n.g. | 11,8 | 5 | 132 |
| 25 | 2256 | n.g. | 18,0 | 5 | 130 |

n.g. nicht gebrochen

## Patentansprüche

1. Mischungen, enthaltend A + B im Verhältnis
   A) 1 bis 99 Gew.-% teilkristalline oder amorphe Polyamide,
   B) 99 bis 1 Gew.-%, eines aromatischen, seitenständig tert.-Alkylestergruppierungen enthaltenden (Co)Polyesters, (Co)Polycarbonats oder (Co)Poly-estercarbonats auf der Basis von seitenständig tert.-Alkylestergruppierung enthaltenden Bisphenolen der Formel (Ia oder Ib)

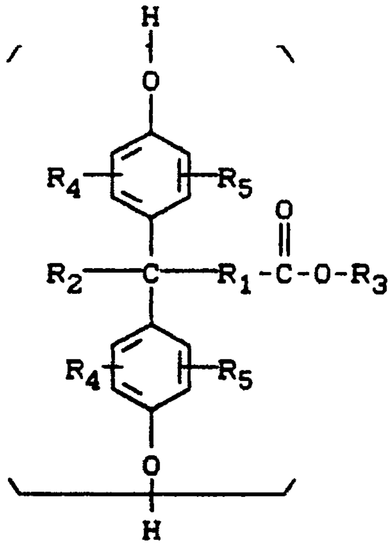

(Ia)

oder

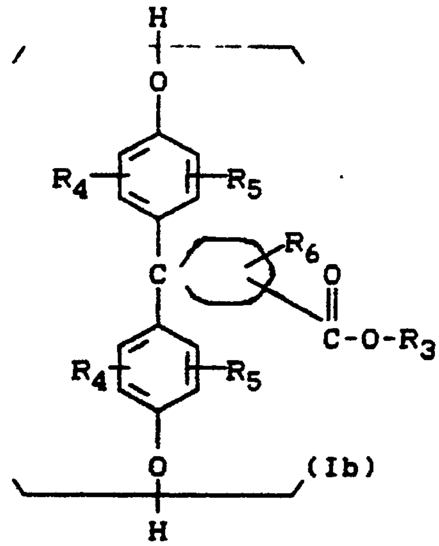

(Ib)

wobei

- $R_1$ ein $C_1$-$C_6$-Alkylenrest, bevorzugt $(CH_2)n$; oder zusammen mit $R_2$ einen Cycloalkylrest mit 5-8 oder 12 C-Atomen,
- $R_2$ ein $C_1$-$C_{12}$-Alkylrest, bevorzugt $CH_3$,
- $R_3$ ein tertiärer $C_4$-$C_9$-Alkylrest,
- $R_4$, $R_5$ unabhängig voneinander Wasserstoff, Halogen, $C_1$-$C_6$-Alkyl, Cycloalkyl, Aryl (bevorzugt Wasserstoff oder Methyl) und
- $R_6$ einen $C_1$-$C_6$-Alkylrest
- n eine ganze Zahl von 0 bis 6, bevorzugt 1 bis 3, insbesondere 2

und gegebenenfalls

C) weitere thermoplastische, aromatische (Co)Polyester, (Co)Polycarbonate und/oder (Co)-Polyestercarbonate

D) übliche Additive, insbesondere Schlagzähmodifikatoren und faserartige Verstärkungsstoffe,

wobei der Gehalt an Bisphenolresten in der Mischung der Polymeren A) + B) + C) 0,01 bis 10 Gew.-% beträgt.

2. Mischungen nach Anspruch 1, enthaltend 25 bis 75 Gew.-% teilkristalline oder amorphe Polyamide mit reduziertem Aminoendgruppengehalt.

3. Mischungen nach Ansprüchen 1 und 2, dadurch gekennzeichnet, daß die aromatischen, seitenständig tert.-Alkylestergruppen tragenden oder enthaltenden Polymeren B) und gegebenenfalls die üblichen Polymeren C) in Mengen von 75 bis 25 Gew.-% verwendet werden.

4. Mischungen nach Ansprüchen 1 bis 3, dadurch gekennzeichnet, daß die Bisphenole I 4,4-Bis-(4-hydroxyphenyl)-valeriansäure, Bis-4,4-(4-hydroxy-3-methylphenyl)-valeriansäure sind.

5. Verfahren nach Ansprüchen 1 bis 4, dadurch gekennzeichnet, daß die Polymeren B) aromatische (Co)-Poly-(ester)-(carbonate) sind.

6. Mischungen nach Ansprüchen 1 bis 5, dadurch gekennzeichnet, daß die Polymeren B) Copolyestercarbonat auf Basis Terephthalsäure, Isophthalsäure, Kohlensäure, Phosgen, Bischlorkohlensäureester oder Diarylcarbonat, Bisphenolen der Formel (I) und Dipenolen der üblichen Art wie 2,2-Bis-(4-hydroxyphenyl)propan, 2,2-Bis-(3,5-dimethyl-4-hydroxyphenyl)propan und/oder Bis-(4-hydroxyphenyl)-3,3,5-trimethylcyclohexan sind.

7. Verfahren nach Ansprüchen 1 bis 6, dadurch gekennzeichnet, daß die Polymeren C) Polycarbonate oder Copolycarbonate auf Basis Phosgen oder Diarylcarbonat und Diphenolen der üblichen Art, wie 2,2-Bis-(4-hydroxyphenyl)-propan, 2,2-Bis-(3,5-dimethyl-4-hydroxyphenyl)propan und/oder Bis-(4-hydroxyphenyl)-3,3,5-trimethylcyclohexan und/oder Polyestercarbonaten oder Copolyestercarbonaten auf Basis Terephthalsäure, Isophthalsäure, Kohlensäure, Phosgen, Bischlorkohlensäureester oder Diarylcarbonat und Diphenolen der üblichen Art, wie 2,2-Bis-(4-hdyroxyphenyl)propan, 2,2-Bis-(3,5-hydroxyphenyl)-3,3,5-trimethylcyclohexan sind.

**8.** Mischungen nach Ansprüchen 1 bis 7, dadurch gekennzeichnet, daß die Mischungen Reste der Bisphenole I in Mengen von 0,3 bis 3 Gew.-% in der Mischung der Polymere A) + B) + C) enthalten.

**9.** Verwendung der Mischungen nach Ansprüchen 1 bis 8 zur Herstellung von Formkörpern durch Verarbeitung über Schmelze.

Europäisches Patentamt

# EUROPÄISCHER RECHERCHENBERICHT

Nummer der Anmeldung

EP 91 10 7057

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| | Keine Entgegenhaltungen.<br>----- | | C 08 L 77/00<br>C 08 L 77/02<br>C 08 L 77/06<br>C 08 L 69/00<br>C 08 L 67/02<br>C 08 L 67/03 |
| | | | **RECHERCHIERTE SACHGEBIETE (Int. Cl.5)** |
| | | | C 08 L |

Der vorliegende Recherchenbericht wurde für alle Patentansprüche erstellt

| Recherchenort | Abschlußdatum der Recherche | Prüfer |
|---|---|---|
| DEN HAAG | 09-07-1991 | LEROY ALAIN |

KATEGORIE DER GENANNTEN DOKUMENTE

X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................
& : Mitglied der gleichen Patentfamilie, übereinstimmendes Dokument

EPO FORM 1503 03.82 (P0403)